# EUROPÄISCHE PATENTSCHRIFT

(11) **EP 1 268 232 B1**
(45) Veröffentlichungstag und Bekanntmachung des Hinweises auf die Patenterteilung: **12.11.2008**
(21) Anmeldenummer: 01911428.9
(22) Anmeldetag: 07.02.2001
(51) Int. Cl.: B60W 30/18, B60W 10/06, B60W 10/10, F02D 41/30, F02D 41/02, F16H 61/02

(54) **VERFAHREN ZUR STEUERUNG EINES AUTOMATISCHEN GETRIEBES IN ABHÄNGIGKEIT VON EINER DER BETRIEBSART EINER BRENNKRAFTMASCHINE**
METHOD FOR THE CONTROL OF AN AUTOMATIC GEARBOX DEPENDING UPON THE OPERATING MODE OF AN INTERNAL COMBUSTION ENGINE
PROCEDE POUR COMMANDER UNE BOITE AUTOMATIQUE EN FONCTION DU MODE DE FONCTIONNEMENT D'UN MOTEUR A COMBUSTION INTERNE

(30) Priorität: 22.03.2000 DE 10014218
(43) Veröffentlichungstag der Anmeldung: 02.01.2003
(73) Patentinhaber: ROBERT BOSCH GMBH, 70442 Stuttgart (DE)
(72) Erfinder: KIND, Werner, 71706 Markgroeningen (DE); HESS, Werner, 70499 Stuttgart (DE); RIES-MUELLER, Klaus, 74906 Bad Rappenau (DE); LUH, Joachim, 74321 Bietigheim-Bissigen (DE)
(86) Internationale Anmeldenummer: PCT/DE2001/000462
(87) Internationale Veröffentlichungsnummer: WO 2001/070536

(56) Entgegenhaltungen:
- EP-A- 0 661 479
- EP-A- 0 698 517
- WO-A-00/50254
- DE-A- 19 813 378
- US-A- 5 468 195
- US-A- 5 643 133
- US-A- 5 754 968
- US-A- 5 846 157

## Beschreibung

### Stand der Technik

Die vorliegende Erfindung betrifft ein Verfahren zur Steuerung eines automatischen Getriebes eines Kraftfahrzeugs mit einer direkteinspritzenden Brennkraftmaschine, die während des Betriebs zwischen einer ersten Betriebsart, in der Kraftstoff während einer Verdichtungsphase, und einer zweiten Betriebsart, in der Kraftstoff während einer Ansaugphase in einen Brennraum eingespritzt wird, umgeschaltet wird. Die Erfindung betrifft außerdem ein Kraftfahrzeug, das eine von einem Motorsteuergerät gesteuerte direkteinspritzende Brennkraftmaschine und ein von einem Getriebesteuergerät gesteuertes automatisches Getriebe aufweist, wobei die Brennkraftmaschine während des Betriebs durch das Motorsteuergerät umschaltbar ist zwischen einer ersten Betriebsart, in der Kraftstoff während einer Verdichtungsphase, und einer zweiten Betriebsart, in der Kraftstoff während einer Ansaugphase in einen Brennraum einspritzbar ist. Die Erfindung betrifft schließlich auch ein Getriebesteuergerät eines automatischen Getriebes eines solchen Kraftfahrzeugs.

Derartige Systeme zur direkten Einspritzung von Kraftstoff in den Brennraum einer Brennkraftmaschine sind allgemein bekannt. Es wird dabei als erste Betriebsart ein sog. Schichtbetrieb und als zweite Betriebsart ein sog. Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt.

Im Schichtbetrieb wird der Kraftstoff während der Verdichtungsphase der Brennkraftmaschine in den Brennraum derart eingespritzt, dass sich im Zeitpunkt der Zündung eine Kraftstoffwolke in unmittelbarer Umgebung einer Zündkerze befindet. Diese Einspritzung kann auf unterschiedliche Weise erfolgen. So ist es möglich, dass die eingespritzte Kraftstoffwolke sich bereits während bzw. unmittelbar nach der Einspritzung bei der Zündkerze befindet und von dieser entzündet wird. Ebenfalls ist es möglich, dass die eingespritzte Kraftstoffwolke durch eine Ladungsbewegung zu der Zündkerze geführt und dann erst entzündet wird. Bei beiden Brennverfahren liegt keine gleichmäßige Kraftstoffverteilung vor, sondern eine Schichtladung.

Der Vorteil des Schichtbetriebs liegt darin, dass mit einer sehr geringen Kraftstoffmenge die anliegenden kleineren Lasten von der Brennkraftmaschine ausgeführt werden können. Größere Lasten können allerdings nicht durch den Schichtbetrieb erfüllt werden.

In dem für derartige größere Lasten vorgesehenen Homogenbetrieb wird der Kraftstoff während der Ansaugphase der Brennkraftmaschine eingespritzt, so dass eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird. Bei Bedarf kann auch bei kleineren Lasten der Homogenbetrieb eingesetzt werden.

Im Schichtbetrieb wird die Drosselklappe in dem zu dem Brennraum führenden Ansaugrohr weit geöffnet und die Verbrennung wird im Wesentlichen nur durch die einzuspritzende Kraftstoffmasse gesteuert und/oder geregelt. Im Homogenbetrieb wird die Drosselklappe in Abhängigkeit von dem angeforderten Moment geöffnet bzw. geschlossen und die einzuspritzende Kraftstoffmasse wird in Abhängigkeit von der angesaugten Luftmasse gesteuert und/oder geregelt.

In beiden Betriebsarten, also im Schichtbetrieb und im Homogenbetrieb, wird die einzuspritzende Kraftstoffmasse zusätzlich in Abhängigkeit von einer Vielzahl weiterer Betriebsgrößen auf einen im Hinblick auf Kraftstoffeinsparung, Abgasreduzierung u.dgl. optimalen Wert gesteuert und/oder geregelt. Die Steuerung und/oder Regelung ist dabei in den beiden Betriebsarten unterschiedlich. Weiterhin kann die Kraftstoffmenge bei den verschiedenen Betriebsarten alternativ auf mehrere getrennte Einspritzungen verteilt werden (sog. Nachspritzer oder Doppeleinspritzung). Entsprechend kann auch abhängig von der Einspritzart (z.B. Doppeleinspritzung bei hoher Last) Einfluß auf die Steuerung des Getriebes genommen werden.

Automatische Getriebe im Sinne der vorliegenden Erfindung umfassen sowohl Mehrgang-Automatikgetriebe (vgl. Kraftfahrtechnisches Taschenbuch, Bosch, 22. Aufl., 1998, S. 564, rechte Spalte bis S. 568, linke Spalte) als auch stufenlose Getriebe (vgl. Kraftfahrtechnisches Taschenbuch, a.a.O., S. 568, rechte Spalte bis S. 569). Stufenlose Getriebe können mechanisch (Umschlingungsgetriebe, Wälzgatriebe), hydraulisch oder elektrisch ausgeführt sein. Ebenso mitumfasst von dem Begriff automatische Getriebe im Sinne der vorliegenden Erfindung sind vollautomatisierte: Handschaltgetriebe (vgl. Kraftfahrtechnisches Taschenbuch, a.a.O., S. 564, linke Spalte). Auf die erwähnten Textstellen in dem Kraftfahrtechnischen Taschenbuch, a.a.O.

Aus dem Stand der Technik ist es bekannt, automatische Getriebe in Abhängigkeit von der Drehzahl der Brennkraftmaschine beziehungsweise von der Geschwindigkeit des Kraftfahrzeugs geforderten Moment zu steuern. Ein Getriebesteuergerät verarbeitet diese Informationen nach einem vorgegebenen Steueralgorithmus und ermittelt daraus die an das Getriebe auszugebenden Größen. Als Schnittstelle zwischen der Elektronik des Getriebesteuergeräts und der Hydraulik des Getriebes dienen elektrohydraulische Wandler.

Aus der EP 0 661 479 A1 ist ein Verfahren zur Steuerung einer Kupplung eines Schaltgetriebes eines Kraftfahrzeugs mit einer Brennkraftmaschine mit herkömmlicher Saugrohreinspritzung und Aufladegerät bekannt.

Bei einer Brennkraftmaschine mit Saugrohreinspritzung lässt sich beispielsweise ein verbrauchsoptimierter Betrieb einfach über eine möglichst niedrige Drehzahl der Brennkraftmaschine einstellen. Im Gegensatz zu herkömmlichen Brennkraftmaschinen mit Saugrohreinspritzung ergeben sich bei direkteinspritzenden Brennkraftmaschinen zusätzliche Betriebsgrößen, die Auswirkungen auf die Fahrbarkeit, insbesondere auf den Kraftstoffverbrauch, die Geräuschemission und die Abgasemission, des Kraftfahrzeugs haben. Bei einer direkteinspritzenden Brennkraftmaschine hängt ein verbrauchsoptimierter Betrieb von weiteren Betriebsgrößen der Brennkraftmaschine ab, die jedoch nach dem Stand der Technik in der Steuerung des automatischen Getriebes keine Berücksichtigung finden.

US 5468195 A zeigt die Merkmale des Oberbegriffes des Anspruches 1, bzw, 10.

Es ist deshalb Aufgabe der vorliegenden Erfindung, bei einem Kraftfahrzeug mit einer direkteinspritzenden Brennkraftmaschine und einem automatischen Getriebe einen möglichst umweltschonenden Betrieb des Kraftfahrzeugs zu ermöglichen.

Die Aufgabe wird durch ein Verfahren mit sämtlichen Merkmalen des Anspruchs 1 gelöst.

Gemäß der vorliegenden Erfindung wird der Tatsache Rechnung getragen, dass die Fahrbarkeit, insbesondere der Kraftstoffverbrauch, die Abgasemission und die Geräuschemission, bei Kraftfahrzeugen mit Brennkraftmaschinen mit direkter Einspritzung von wesentlich mehr Zustandsgrößen abhängig ist als bei Brennkraftmaschinen mit Saugrohreinspritzung. So ist es bei direkteinspritzenden Brennkraftmaschinen beispielsweise nicht zwingend, dass bei einer Absenkung der Drehzahl der Brennkraftmaschine auch der Kraftstoffverbrauch sinkt, wenn gleichzeitig eine Umschaltung der Betriebsart stattfindet (zum Beispiel von Schichtbetrieb auf Homogenbetrieb).

Außer dem von dem Fahrer des Kraftfahrzeugs geforderten Moment und der Drehzahl der Brennkraftmaschine bzw. der Geschwindigkeit des Kraftfahrzeugs wird erfindungsgemäß also auch die aktuelle Betriebsart der Brennkraftmaschine bei der Steuerung des automatischen Getriebes berücksichtigt. Es ist beispielsweise denkbar, dass das Getriebesteuergerät in Abhängigkeit von der Betriebsart auf unterschiedliche Kennfelder zugreift und so eine betriebsartindividuelle Anpassung der Getriebestellung ermöglicht. Ein Kennfeld für den Schichtbetrieb wird.beispielsweise eher niedrigere Drehzahlen der Brennkraftmaschinen einstellen. Dadurch kann erreicht werden, dass die Brennkraftmaschine länger im Schichtbetrieb betrieben wird. Bei niedrigeren Drehzahlen ergeben sich zum Teil erhebliche Kraftstoffeinsparungen, indem anstatt im Homogenbetrieb im Schichtbetrieb gefahren wird. Eine steigende Leistungsanforderung durch den Fahrer des Kraftfahrzeugs wird vorzugsweise zunächst über eine höhere Füllung (Öffnen der Drosselklappe) als über eine höhere Drehzahl erfüllt.

Wenn das Motorsteuergerät Homogenbetrieb fordert, beispielsweise zu Diagnosezwecken oder zur Katalysatorregenerierung , schaltet das Getriebesteuergerät auf ein Homogen-Kennfeld um. Unter Umständen kann es vorteilhaft sein, die Drehzahl-Drosselklappen-Kombination im Homogenbetrieb gegenüber dem Schichtbetrieb zu variieren. Die jeweils geeignete Drehzahl-Drosselklappen-Kombination kann dem Homogen-Kennfeld entnommen werden.

Anders als bei stufenlosen Getrieben, bei denen auf Kennfelder zugegriffen wird, kann bei vollautomatisierten Handschaltgetrieben und Mehrgang-Automatikgetrieben über die Betriebsart der Brennkraftmaschine die Charakteristik von Schaltkennlinien verändert werden, was sich beispielsweise durch ein früheres oder späteres Hoch- bzw. Herunterschalten (abhängig von der Betriebsart der Brennkraftmaschine) äußert.

Durch das Steuern des automatischen Getriebes in Abhängigkeit von dem momentan anliegenden Ladedruck wird eine weitere Optimierung der Fahrbarkeit des Kraftfahrzeugs, insbesondere eine Reduzierung des Kraftstoffverbrauchs, der Geräuschemission und der Abgasemission, erzielt.

Gemäß einer vorteilhaften Weiterbildung der vorliegenden Erfindung wird vorgeschlagen, dass die aktuell möglichen Betriebsarten der Brennkraftmaschine bei der Steuerung des automatischen Getriebes berücksichtigt werden. In bestimmten Betriebszuständen der Brennkraftmaschine, bspw. zu Diagnosezwecken oder zur Katalysatorregenerierung, kann es vorkommen, dass eine bestimmte Betriebsart der Brennkraftmaschine temporär zwingend ist oder bestimmte Betriebsarten temporär nicht möglich sind. In diesen Fällen wird das automatische Getriebe dann derart angesteuert, dass die Brennkraftmaschine verbrauchsoptimiert in der oder einer der aktuell möglichen Betriebsart betrieben wird. In einem solchen Fall kann die Getriebesteuerung auf ein geeignetes Kennfeld bzw. geeignete Schaltkennlinien zugreifen.

Gemäß einer bevorzugten Ausführungsform der vorliegenden Erfindung wird vorgeschlagen, dass das automatische Getriebe in Abhängigkeit von einem von dem Fahrer des Kraftfahrzeugs geforderten Moment gesteuert wird. Vorteilhafterweise wird das automatische Getriebe in Abhängigkeit von der Summe der angeforderten Momente gesteuert. Die Summe der angeforderten Momente ergibt sich aus dem von dem Fahrer angeforderten Moment, den Momenten für die Nebenaggregate (ständig betriebene und zuschaltbare Nebenaggregate) und Momenten, die von Reibung in dem Triebstrang verursacht werden.

Von besonderer Bedeutung ist die Realisierung des erfindungsgemäßen Verfahrens in Form eines Steuerelements, das für ein Getriebesteuergerät eines automatischen Getriebes eines Kraftfahrzeugs vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeicherte Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Abwendung kommen, bspw. ein Read-Only-Memory (ROM) oder ein Flash-Memory.

Als eine weitere Lösung der Aufgabe der vorliegenden Erfindung wird ausgehend von dem Kraftfahrzeug der eingangs genannten Art vorgeschlagen, dass zwischen dem Motorsteuergerät und dem Getriebesteuergerät Übertragungsmittel zur Übermittlung der Betriebsart, in der die Brennkraftmaschine momentan betrieben wird, ausgebildet sind. Die Übermittlung der Betriebsart kann entweder leitungsorientiert oder, bspw. über einen Daten-Bus, paketorientiert erfolgen. Außer der Betriebsart der Brennkraftmaschine können über die Übertragungsmittel auch weitere Betriebsgrößen der Brennkraftmaschine und/oder des Kraftfahrzeugs an das Getriebesteuergerät übermittelt werden. Dabei ist insbesondere an die Übermittlung der aktuell möglichen Betriebsarten der Brennkraftmaschine, eines von dem Fahrer des Kraftfahrzeugs angeförderten Moments oder der Summe der angeforderten Momente gedacht.

Gemäß einer vorteilhaften Weiterbildung der vorliegenden Erfindung wird vorgeschlagen, dass die Übertragungsmittel als ein Controller-Area-Network (CAN)-Bus ausgebildet sind. Der CAN-Bus wurde von der International Organization for Standardization (ISO) für den Datenaustausch in Kraftfahrzeugen standardisiert: Für Applikationen bis 125 kbit/s als ISO 11519-2 und für Applikationen über 125 kbit/s als ISO 11898. Weitere Ausführungen zu dem CAN-Bus können dem Kraftfahrtechnischen Taschenbuch, a.a.O., S. 800 bis 802 entnommen werden, auf die hier ausdrücklich Bezug genommen wird.

Gemäß einer bevorzugten Ausführungsform der vorliegenden Erfindung wird vorgeschlagen, dass das Motorsteuergerät und das Getriebesteuergerät zu einem gemeinsamen Triebstrangsteuergerät zusammengefasst sind. In diesem Fall beschränkt sich die Übermittlung der Betriebsart, in der die Brennkraftmaschine momentan betrieben wird, und anderer Betriebsgrößen auf eine Kommunikation innerhalb des Triebstrangsteuergeräts zwischen einem Bereich, der für die Steuerung der Brennkraftmaschine verantwortlich ist, und einem anderen Bereich, der für die Steuerung des automatischen Getriebes verantwortlich ist.

Gemäß einer weiteren bevorzugten Ausführungsform der vorliegenden Erfindung wird vorgeschlagen, dass das automatische Getriebe als ein kontinuierlich verstellbares stufenloses Automatikgetriebe (Continously Variable Transmission, CVT) ausgebildet ist. Ein solches stufenloses Automatikgetriebe ist in dem Kraftfahrtechnischen Taschenbuch, a.a.O., S. 568, rechte Spalte bis S. 569 beschrieben, auf die hier ausdrücklich Bezug genommen wird.

Schließlich wird als eine weitere Lösung der Aufgabe der vorliegenden Erfindung ausgehend von dem Getriebesteuergerät eines automatischen Getriebes eines Kraftfahrzeugs der eingangs genannten Art vorgeschlagen, dass das Getriebesteuergerät das automatische Getriebe durch in Abhängigkeit von der Betriebsart steuert, in der die Brennkraftmaschine momentan betrieben wird.

Weitere Merkmale, Anwendungsmöglichkeiten und Vorteile der Erfindung ergeben sich aus der nachfolgenden Beschreibung eines Ausführungsbeispiels der Erfindung, das in den Zeichnungen dargestellt ist. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen. Es zeigen:
- Figur 1: ein erfindungsgemäßes Kraftfahrzeug gemäß einer bevorzugten Ausführungsform; und
- Figur 2: ein Diagramm der Betriebsart der Brennkraftmaschine in Abhängigkeit von der Drehzahl und dem Drehmoment der Brennkraftmaschine.

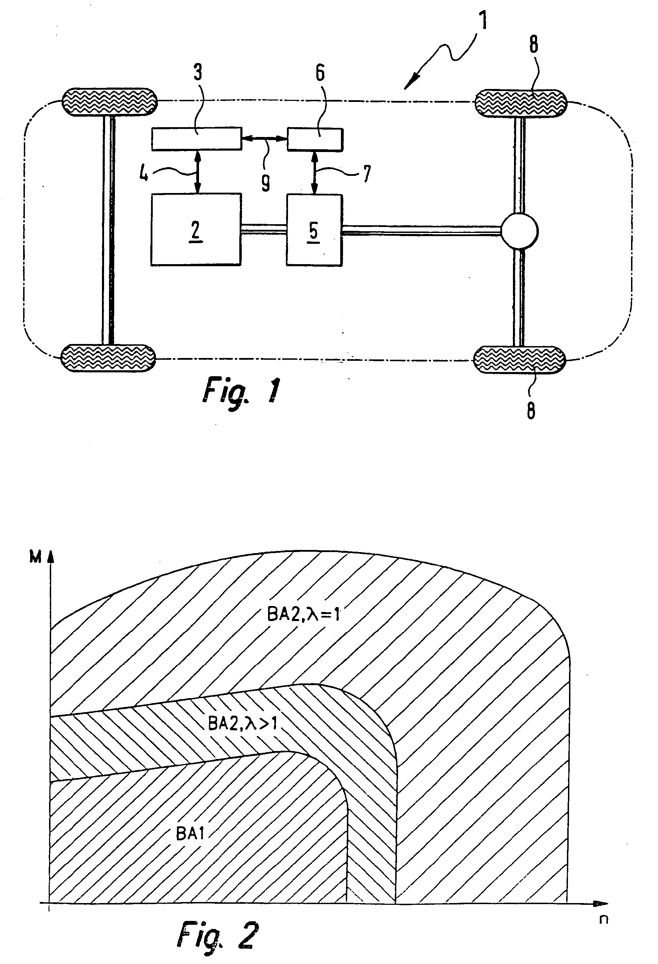

In Figur 1 ist ein erfindungsgemäßes Kraftfahrzeug in seiner Gesamtheit mit dem Bezugszeichen 1 bezeichnet. Das Kraftfahrzeug 1 weist eine direkteinspritzende Brennkraftmaschine 2 auf, die von einem Motorsteuergerät 3 gesteuert wird. Über eine Datenübertragungsverbindung 4 werden für die Steuerung der Brennkraftmaschine 2 relevante Betriebszustandsgrößen an das Motorsteuergerät 3 übermittelt. Die Betriebszustandsgrößen sind bspw. die Drehzahl n der Brennkraftmaschine 2 oder das von der Brennkraftmaschine 2 abgegebene Moment M_ist. Die Datenübertragungsverbindung 4 kann als eine Datenleitung oder als ein Daten-Bus ausgebildet sein. Das Motorsteuergerät 3 ermittelt in Abhängigkeit von den Betriebszustandsgrößen der Brennkraftmaschine 2 und in Abhängigkeit weiterer Größen, bspw. eines von dem Fahrer des Kraftfahrzeugs 1 angeforderten Moments M_soll, geeignete Werte für die Steuergrößen der Brennkraftmaschine 2. Steuergrößen, über deren Variation der Betrieb der Brennkraftmaschine 2 beeinflusst werden kann, sind bspw. das Luft-Kraftstoff-Verhältnis Lambda, der Zündzeitpunkt und die zugeführte Kraftstoffmasse.

Die Brennkraftmaschine 2 ist als eine direkteinspritzende Brennkraftmaschine ausgebildet, die durch das Motorsteuergerät 3 umschaltbar ist zwischen einer ersten Betriebsart (Schichtbetrieb), in der Kraftstoff während einer Verdichtungsphase in einen Brennraum eingespritzt wird, und einer zweiten Betriebsart (Homogenbetrieb), in der Kraftstoff während einer Ansaugphase in den Brennraum eingespritzt wird. In Figur 2 ist in einem Diagramm über der Drehzahl n der Brennkraftmaschine 2 und dem von der Brennkraftmaschine 2 abgegebenen Drehmoment M die bevorzugte Betriebsart der Brennkraftmaschine 2 dargestellt. Demnach wird die Brennkraftmaschine 2 bei relativ niedrigen Drehzahlen n und geringen Drehmomenten M in der ersten Betriebsart (Schichtbetrieb) betrieben. Bei relativ hohen Drehzahlen n der Brennkraftmaschine 2 und/oder relativ großen Drehmomenten M wird die Brennkraftmaschine 2 in der zweiten Betriebsart (Homogenbetrieb) betrieben. Bei kleineren Lasten kann die Brennkraftmaschine 2 in einen mageren Homogenbetrieb (lambda > 1) umgeschaltet werden.

Das.Kraftfahrzeug 1 weist des Weiteren ein automatisches Getriebe 5 auf, das von einem Getriebesteuergerät 6 gesteuert wird. Das automatische Getriebe 5 ist als ein kontinuierlich verstellbares stufenloses Automatikgetriebe (Continously Variable Transmission, CVT) ausgebildet. Zwischen dem Getriebe 5 und dem Getriebesteuergerät 6 ist eine Datenübertragungsverbindung 7 ausgebildet, über die für die Getriebesteuerung relevante Betriebszustandsgrößen des Getriebes 5 an das Getriebesteuergerät 6 übermittelt werden.

Das von der Brennkraftmaschine 2 abgegebene Drehmoment M wird über das Getriebe 5 an die angetriebenen Räder 8 des Kraftfahrzeugs 1 übertragen und bewirkt so einen Vortrieb des Kraftfahrzeugs 1.

Erfindungsgemäß sind zwischen dem Motorsteuergerät 3 und dem Getriebesteuergerät 6 Übertragungsmittel 9 ausgebildet, über die bspw. die Betriebsart, in der die Brennkraftmaschine momentan betrieben wird, übermittelt werden kann. Des Weiteren können über die Übertragungsmittel 9 die aktuell möglichen Betriebsarten der Brennkraftmaschine 2, ein von dem Fahrer des Kraftfahrzeugs 1 angefordertes Moment M oder die Summe der angeforderten Momente M übertragen werden. Die Übertragungsmittel 9 sind vorzugsweise als ein Controller-Area-Network (CAN)-Bus ausgebildet, über den die relevanten Daten paketorientiert übermittelt werden.

Alternativ können das Motorsteuergerät 3 und das Getriebesteuergerät 6 sowie die Übertragungsmittel 9 zu einem gemeinsamen Triebstrangsteuergerät (nicht dargestellt) zusammengefasst sein.

In dem Getriebesteuergerät 6 wird zunächst in Abhängigkeit von der Drehzahl n der Brennkraftmaschine 2 bzw. von der Geschwindigkeit V des Kraftfahrzeugs 1 und von dem von dem Fahrer des Kraftfahrzeugs 1 geforderten Moment M mittels Kennfeldzugriff eine Primärdrehzahl n_prim ermittelt. In Abhängigkeit von einem von dem Fahrer gewählten Schaltprogramm (z.B. Sport oder Economy) kann das Getriebesteuergerät 6 auf verschiedene Kennfelder zugreifen. Durch die Auswahl eines Schaltprogramms wird also zwischen verschiedenen Kennfeldern hin- und hergeschaltet.

Dementsprechend kann abhängig von der Betriebsart der Brennkraftmaschine 2 auch zwischen unterschiedlichen Kennfeldern hin- und hergeschaltet werden. Das Kennfeld für den Schichtbetrieb wird - ähnlich wie im Economy-Mode - eher niedrigere Drehzahlen n der Brennkraftmaschine 2 einstellen. Dadurch wird erreicht, dass die Brennkraftmaschine 2 länger im Schichtbetrieb betrieben wird. Bei niedrigen Drehzahlen n ergeben sich teilweise erhebliche Kraftstoffverbrauchseinsparungen, indem im Schichtbetrieb anstatt im Homogenbetrieb gefahren wird. Wird eine bestimmte Umschaltdrehzahl überschritten, wird aus dem Schichtbetrieb in den Homogenbetrieb umgeschaltet. Um möglichst verbrauchsoptimiert zu fahren, sollte deshalb die Umschaltdrehzahl möglichst nicht überschritten werden.

Das Getriebesteuergerät 6 steuert das automatische Getriebe 5 dementsprechend an. Eine Leistungsanforderung des Fahrers kann zunächst über eine höhere Füllung des Brennraums (Öffnen der Drosselklappe) erfüllt werden.

In bestimmten Situationen fordert das Motorsteuergerät 3 einen Homogenbetrieb der Brennkraftmaschine 2. Diese Situationen treten bspw. zur Katalysatorregenerierung oder zu Diagnosezwecken auf. In diesem Fall schaltet das Getriebesteuergerät 6 auf ein Homogen-Kennfeld um. Das Homogen-Kennfeld für einen erzwungenen Homogenbetrieb kann sich von einem herkömmlichen Homogen-Kennfeld unterscheiden. So kann es im erzwungenen Homogenbetrieb unter Umständen eine Verbesserung des Kraftstoffverbrauchs, der Abgasemission und/oder der Geräuschemission bringen, wenn eine andere Drehzahl-Drosselklappen-Kombination genützt wird als im normalen Homogenbetrieb.

In einem anderen Beispiel kann es unter Umständen günstiger sein, bei einer Beschleunigung des Kraftfahrzeugs 1 nicht von dem Schichtbetrieb in den Homogenbetrieb umzuschalten - wie dies zur Zeit üblich ist -, sondern die Leistungsanforderung über eine stärkere Erhöhung der Drehzahl n im Schichtbetrieb zu erreichen. Das bedeutet, dass dem Getriebesteuergerät 6 mitgeteilt wird, dass die Brennkraftmaschine 2 im Schichtbetrieb betrieben wird, und das Getriebesteuergerät 6 steuert das Getriebe 5 derart an, dass sich die Drehzahl n stärker erhöht.

Es versteht sich, dass der Grundgedanke der vorliegenden Erfindung auf alle automatischen Getriebe übertragbar ist. Anstatt auf ein anderes Kennfeld - wie-bei stufenlos verstellbaren Automatikgetrieben - könnte bei einer Änderung der Betriebsart die Charakteristik von Schaltkennlinien verändert werden, was sich bspw. durch ein früheres bzw. späteres Hoch- oder Herunterschalter (in Abhängigkeit von der Betriebsart der Brennkraftmaschine 2) äußert.

Des Weiteren könnte der Grundgedanke der vorliegenden Erfindung auch auf Turbomotoren übertragen werden. Bei Turbomotoren kann eine gewünschte Leistung durch Variation des Ladedrucks bereitgestellt werden. Ein hoher Ladedruck bedeutet dabei in der Regel einen Verbrauchsnachteil, aber ein besseres Beschleunigungsverhalten. Durch Übermittlung des momentan anliegenden Ladedrucks und wahlweise auch des derzeit möglichen Ladedruckbereichs an das Getriebesteuergerät kann eine zusätzliche Optimierung des Kraftstoffverbrauchs, der Abgasemission und/oder der Geräuschemission eines Turbomotors erzielt werden.

## Patentansprüche

1. Verfahren zur Steuerung eines automatischen Getriebes (5) eines Kraftfahrzeugs (1) mit einer direkteinspritzenden Brennkraftmaschine (2), die während des Betriebs zwischen einer ersten Betriebsart (BA1) und einer zweiten Betriebsart (BA2) umgeschaltet wird, **dadurch gekennzeichnet, dass** in der ersten Betriebsart (BA1) Kraftstoff während einer Verdichtungsphase und in der zweiten Betriebsart (BA2) Kraftstoff während einer Ansaugphase in einen Brennraum eingespritzt wird, dass das automatische Getriebe (5) in Abhängigkeit von der Betriebsart (BA1; BA2), in der die Brennkraftmaschine (2) momentan betrieben wird, und in Abhängigkeit von einem momentan anliegenden Ladedruck eines Aufladegeräts der Brennkraftmaschine (2) gesteuert wird.

2. Verfahren nach Anspruch 1, **dadurch gekennzeichnet, dass** die aktuell möglichen Betriebsarten (BA1, BA2) der Brennkraftmaschine (2) bei der Steuerung des automatischen Getriebes (5) berücksichtigt werden.

3. Verfahren nach Anspruch 1 oder 2, **dadurch gekennzeichnet, dass** das automatische Getriebe (5) in Abhängigkeit von einem von dem Fahrer des Kraftfahrzeugs (1) angeforderten Moment gesteuert wird.

4. Verfahren nach Anspruch 3, **dadurch gekennzeichnet, dass** des automatische Getriebe (5) in Abhängigkeit von der Summe der angeforderten Momente gesteuert wird.

5. Steuerelement, insbesondere Read-Only-Memory (ROM) oder Flash-Memory, für ein Getriebesteuergerät (6) eines automatischen Getriebes (5) eines Kraftfahrzeugs (1), auf dem ein Programm abgespeichert ist, das auf einem Rechengerät, insbesondere auf einem Mikroprozessor, abläuft und ein Verfahren nach einem der vorangegangenen Ansprüche ausführt.

6. Kraftfahrzeugzeug(1), das eine von einem Motorsteuergerät (3) gesteuerte direkteinspritzende Brennkraftmaschine (2) und ein von einem Getriebesteuergerät (6) gesteuertes automatisches Getriebe (5) aufweist, wobei die Brennkraftmaschine (2) während des Betriebs durch das Motorsteuergerät (3) umschaltbar ist zwischen einer ersten Betriebsart (BA1) und einer zweiten Betriebsart (BA2), **dadurch gekennzeichnet, dass** in der ersten Betriebsart (BA1) Kraftstoff während einer Verdichtungsphase und in der zweiten Betriebsart (BA2) Kraftstoff während einer Ansaugphase in einen Brennraum einspritzbar ist, dass zwischen dem Motorsteuergerät (3) und dem Getriebesteuergerät (6) Übertragungsmittel (9) zur Übermittlung der Betriebsart (BA1; BA2), in der die Brennkraftmaschine (2) momentan betrieben wird, ausgebildet sind, und dass ein momentan anliegender Ladedruck eines Aufladegeräts der Brennkraftmaschine (2) von dem Motorsteuergerät (3) über die Übertragungsmittel (9) an das Getriebesteuergerät (6) übertragbar und das Getriebe (5) in Abhängigkeit von dem Ladedruck steuerbar ist.

7. Kraftfahrzeug(1) nach Anspruch 6, **dadurch gekennzeichnet, dass** die Übertragungsmittel (9) als ein Controller-Area-Network (CAN)-Bus ausgebildet sind.

8. Kraftfahrzeug(1) nach Anspruch 6 oder 7, **dadurch gekennzeichnet, dass** das Motorsteuergerät (3) und das Getriebesteuergerät (6) zu einem gemeinsamen Triebstrangsteuergerät zusammengefasst sind.

9. Kraftfahrzeug(1) nach einem der Ansprüche 6 bis 8, **dadurch gekennzeichnet, dass** das automatische Getriebe (5) als ein kontinuierlich verstellbares stufenloses Automatikgetriebe (Continously Variable Transmission, CVT) ausgebildet ist.

10. Getriebesteuergerät (6) eines automatischen Getriebes (5) eines Kraftfahrzeugs(1) mit einer direkteinspritzenden Brennkraftmaschine (2), die während des Betriebs umschaltbar ist zwischen einer ersten Betriebsart (BA1) und einer zweiten Betriebsart(BA2), **dadurch gekennzeichnet, dass** in der ersten Betriebsart Kraftstoff während einer Verdichtungsphase und in der zweiten Betriebsart Kraftstoff während einer Ansaugphase in einen Brennraum einspritzbar ist, dass das Getriebesteuergerät (6) das automatische Getriebe (5) in Abhängigkeit von der Betriebsart (BA1; BA2), in der die Brennkraftmaschine (2) momentan betrieben wird, und in Abhängigkeit von einem momentan anliegenden Ladedruck eines Aufladegeräts der Brennkraftmaschine (2) steuert.

## Claims

1. Method for controlling an automatic transmission (5) of a motor vehicle (1) having a direct-injection internal combustion engine (2) which, during operation, is switched between a first operating mode (BA1) and a second operating mode (BA2), **characterized in that**, in the first operating mode (BA1), fuel is injected into a combustion chamber during a compression phase, and in the second operating mode (BA2), fuel is injected into a combustion chamber during an intake phase, **in that** the automatic transmission (5) is controlled as a function of the operating mode (BA1; BA2) in which the internal combustion engine (2) is presently being operated and as a function of a charge pressure presently being applied by a supercharging unit of the internal combustion engine (2).

2. Method according to Claim 1, **characterized in that** the presently possible operating modes (BA1, BA2) of the internal combustion engine (2) are taken into consideration in the control of the automatic transmission (5).

3. Method according to Claim 1 or 2, **characterized in that** the automatic transmission (5) is controlled as a function of a torque demanded by the driver of the motor vehicle (1).

4. Method according to Claim 3, **characterized in that** the automatic transmission (5) is controlled as a function of the sum of the demanded torques.

5. Control element, in particular read-only memory (ROM) or flash memory, for a transmission control unit (6) of an automatic transmission (5) of a motor vehicle (1), on which control element is stored a programme which runs on a processing unit, in particular on a microprocessor, and which carries out a method according to one of the preceding claims.

6. Motor vehicle (1) which has a direct-injection internal combustion engine (2), which is controlled by an engine control unit (3), and an automatic transmission (5) which is controlled by a transmission control unit (6), with it being possible for the internal combustion engine (2) to be switched between a first operating mode (BA1) and a second operating mode (BA2) by means of the engine control unit (3) during operation, **characterized in that**, in the first operating mode (BA1), fuel can be injected into a combustion chamber during a compression phase, and in the second operating mode (BA2), fuel can be injected into a combustion chamber during an intake phase, **in that** transmitting means (9) for transmitting the operating mode (BA1; BA2) in which the internal combustion engine (2) is presently being operated are formed between the engine control unit (3) and the transmission control unit (6), and **in that** a charge pressure presently being applied by a supercharging unit of the internal combustion engine (2) can be transmitted from the engine control unit. (3) via the transmitting means (9) to the transmission control unit (6), and the transmission (5) can be controlled as a function of the charge pressure.

7. Motor vehicle (1) according to Claim 6,
**characterized in that** the transmitting means (9) are formed as a controller-area-network (CAN) bus.

8. Motor vehicle (1) according to Claim 6 or 7, **characterized in that** the engine control unit (3) and the transmission control unit (6) are combined to form a common drivetrain control unit.

9. Motor vehicle (1) according to one of Claims 6 to 8, **characterized in that** the automatic transmission (5) is embodied as a continuously adjustable stepless automatic transmission (continuously variable transmission, CVT).

10. Transmission control unit (6) of an automatic transmission (5) of a motor vehicle (1) having a direct-injection internal combustion engine (2) which, during operation, can be switched between a first operating mode (BA1) and a second operating mode (BA2), **characterized in that**, in the first operating mode, fuel can be injected into a combustion chamber during a compression phase, and in the second operating mode, fuel can be injected into a combustion chamber during an intake phase, **in that** the transmission control unit (6) controls the automatic transmission (5) as a function of the operating mode (BA1; BA2) in which the internal combustion engine (2) is presently being operated and as a function of a charge pressure presently being applied by a supercharging unit of the internal combustion engine (2).

## Revendications

1. Procédé de commande d'une boîte de vitesse automatique (5) d'un véhicule automobile (1) équipé d'un moteur à combustion interne (2) à injection directe, commutant pendant le fonctionnement entre un premier mode de fonctionnement (BA1) et un second mode de fonctionnement (BA2),
**caractérisé en ce que**
dans le premier mode de fonctionne (BA1), le carburant est injecté au cours de la phase de compression et dans le second mode de fonctionnement (BA2), le carburant est injecté au cours de la phase d'admission dans une chambre de combustion,
la boîte de vitesse automatique (2) fonctionnant instantanément selon le mode de fonctionnement (BA1 ; BA2) du moteur à combustion interne (2), et
elle est commandée en fonction de la pression d'alimentation appliquée instantanément par un appareil de suralimentation du moteur à combustion interne (2).

2. Procédé selon la revendication 1,
**caractérisé en ce que**
les modes de fonctionnement actuellement possibles (BA1, BA2) du moteur à combustion interne (2) sont pris en compte pour la commande de la boîte de vitesse automatique (5).

3. Procédé selon la revendication 1 ou 2,
**caractérisé en ce que**
la boîte de vitesse automatique (5) est commandée en fonction du couple demandé par le conducteur du véhicule (1).

4. Procédé selon la revendication 3,
**caractérisé en ce que**
la boîte de vitesse automatique (5) est commandée en fonction de la somme des couples demandés.

5. Elément de commande notamment mémoire morte ROM ou mémoire flash pour un appareil de commande de boîte de vitesse (6) d'une boîte de vitesse automatique (5) d'un véhicule automobile (1) contenant un programme exécuté par un appareil de calcul notamment par un microprocesseur et exécutant un procédé selon l'une des revendications précédentes.

6. Véhicule automobile (1) comportant un moteur à combustion interne (2) à injection directe commandé par un appareil de commande de moteur (3) et une boîte de vitesse automatique (5) commandée par un appareil de commande de boîte de vitesse (6),
le moteur à combustion interne (2) étant commuté pendant le fonctionnement par l'appareil de commande de moteur (3) entre un premier mode de fonctionnement (BA1) et un second mode de fonctionnement (BA2),
**caractérisé en ce que**
dans le premier mode de fonctionnement (BA1), le carburant est injecté dans la chambre de combustion au cours de la phase de compression et dans le second mode de fonctionnement (BA2), le carburant est injecté dans la chambre de combustion au cours de la phase d'admission,
et entre l'appareil de commande de moteur (3) et l'appareil de commande de boîte de vitesse (6) il y a des moyens de transmission (9) pour transmettre le mode de fonctionnement (BA1, BA2) correspondant au fonctionnement instantané du moteur à combustion interne (2), et
la pression de l'alimentation appliquée instantanément par un appareil de suralimentation équipant le moteur à combustion interne (2) est transmise par l'appareil de commande de moteur (3) par l'intermédiaire des moyens de transmission (9) à l'appareil de commande de boîte de vitesse (6), et
la boîte de vitesse (5) est commandée en fonction de la pression d'alimentation.

7. Véhicule automobile (1) selon la revendication 6,
**caractérisé en ce que**
les moyens de transmission (9) sont constitués par un bus de contrôleur de réseau (bus CAN).

8. Véhicule automobile (1) selon la revendication 6 ou 7,
**caractérisé en ce que**
l'appareil de commande de moteur (3) et l'appareil de commande de boîte de vitesse (6) sont regroupés en un appareil de commande commun de transmission.

9. Véhicule automobile (1) selon l'une des revendications 6 à 8,
**caractérisé en ce que**
la boîte de vitesse automatique (5) est réalisée comme boîte de vitesse automatique à réglage continu (transmission à variation continue CVT).

10. Appareil de commande de boîte de vitesse (6) d'une boîte de vitesse automatique (5) d'un véhicule automobile (1) équipé d'un moteur à combustion interne (2) à injection directe, et qui commute pendant le mode de fonctionnement entre un premier mode de fonctionnement (BA1) et un second mode de fonctionnement (BA2),
**caractérisé en ce que**
dans le premier mode de fonctionnement, le carburant est injecté dans la chambre de combustion au cours de la phase de compression et dans le second mode de fonctionnement, le carburant est injecté dans la chambre de combustion au cours de la phase d'admission,
l'appareil de commande de boîte de vitesse (6) commande la boîte de vitesse automatique (5) selon le mode de fonctionnement (BA1; BA2) dans lequel se trouve à ce moment le moteur à combustion interne (2) et en fonction d'une pression d'alimentation appliquée à l'instant, fournie par l'appareil de suralimentation du moteur à combustion interne (2).
